Europäisches Patentamt

(19) European Patent Office

Office européen des brevets

(11) Publication number : 0 397 238 B1

# (12) EUROPEAN PATENT SPECIFICATION

(45) Date of publication of patent specification :
22.11.95 Bulletin 95/47

(51) Int. Cl.⁶ : $G11B\ 27/30$, $G11B\ 7/013$, $G11B\ 11/10$, $G11B\ 27/36$

(21) Application number : 90201094.1

(22) Date of filing : 02.05.90

(54) Information recording system, and recording device and record carrier for use in such an information recording system.

(30) Priority : 08.05.89 NL 8901145

(43) Date of publication of application :
14.11.90 Bulletin 90/46

(45) Publication of the grant of the patent :
22.11.95 Bulletin 95/47

(84) Designated Contracting States :
AT BE CH DE ES FR GB IT LI NL SE

(56) References cited :
EP-A- 0 164 131
EP-A- 0 265 695
EP-A- 0 265 849
EP-A- 0 265 984
EP-A- 0 288 114
EP-A- 0 292 917
EP-A- 0 299 573
EP-A- 0 325 330
EP-A- 0 326 215
EP-A- 0 342 748
DE-A- 3 100 278
DE-A- 3 615 468
GB-A- 2 145 555
US-A- 4 682 317

(56) References cited :
PATENT ABSTRACTS OF JAPAN vol. 11, no. 93 (P-559)(2540) 24 March 1987
JP-A-1014731, PIONEER ELECTRONIC CORP., 18.01.1989 & PATENT ABSTRACTS OF JAPAN, vol.13, no.188 (P-866)(3536). May 8, 1989
PATENT ABSTRACTS OF JAPAN vol. 12, no. 288 (P-741)(3135) 08 August 1988
PATENT ABSTRACTS OF JAPAN vol. 13, no. 64 (P-827)(3412) 14 February 1989

(73) Proprietor : Philips Electronics N.V.
Groenewoudseweg 1
NL-5621 BA Eindhoven (NL)

(72) Inventor : Roth, Rudolf
c/o INT. OCTROOIBUREAU B.V.,
Prof. Holstlaan 6
NL-5656 AA Eindhoven (NL)
Inventor : van der Zande, Paulus Christianus Maria
c/o INT. OCTROOIBUREAU B.V.,
Prof. Holstlaan 6
NL-5656 AA Eindhoven (NL)

(74) Representative : Groenendaal, Antonius Wilhelmus Maria et al
INTERNATIONAAL OCTROOIBUREAU B.V.,
Prof. Holstlaan 6
NL-5656 AA Eindhoven (NL)

EP 0 397 238 B1

## Description

The invention relates to an information-recording system according to the preamble of Claim 1.

The invention further relates to a recording device and record carrier for use in such an information-recording system.

An information recording system as defined in the opening paragraph is known from Netherlands Patent Application NL-A-8700655 (PHN 12.063), corresponding to EP-A-0 265 984.

Since an uninterrupted track is available for recording the known system is very suitable for recording EFM-modulated signals, such as for example a CD audio signal, in a desired track portion whose beginning can be specified by means of a specific address code.

However, if the known information-recording system is to be used for recording a CD signal in such a way that the record carrier thus obtained can be read by existing read apparatuses for read-only CD audio discs or CD-ROM discs, it is desirable that the radial positions of the beginnings of the lead-in area and the program area as prescribed by the CD standard can be detected accurately. Moreover, it is desirable that prior to the beginning of the recording process the overall playing time of the record carrier is known. This is desirable in particular if standard CD signals are to be recorded, in which case the program area should end with a lead out track in which a specific lead-out signal is recorded. In order to obtain a lead-out track of an appropriate length the lead-out track should begin at an adequate distance from the end of the track.

Apart from the afore mentioned data it may be desirable that for the purpose of controlling the recording process other control data, which may vary considerably from disc to disc, are known prior to recording. For example, the write energy for different types of recording materials may differ substantially.

It is an object of the invention to provide an information-recording system in which the data required for recording can be obtained in a simple manner. To this end the information-recording system as defined in the opening paragraph is provided with the features according to the characterizing part of Claim 1.

A further embodiment of the recording system is characterized in that the address codes and the auxiliary codes have the same data format. By selecting equal formats it is achieved that the signal read for the address codes and the auxiliary codes can be processed largely by the same hardware.

An embodiment of the device is characterized in that each time one of the address codes contained in the auxiliary signal or one of the address codes contained in the auxiliary signal is recorded at equidistant locations in the track, the address codes each time indicating the distance, measured in the track direction, between the location where they have been recorded and a specific reference position, the recording device comprising synchronising means for deriving a clock signal from the auxiliary signal being read, which clock signal is in synchronism with the process of reading the equidistantly recorded address and auxiliary codes, a counter controlled by the clock signal, and means responsive to a correctly read address code to set the count to a value corresponding to the address code being read.

In this embodiment the counter will always indicate the correct address of the track portion from which the auxiliary signal is read. This has the advantage that the track portions in which instead of an address code an auxiliary code is recorded remain addressable.

A further embodiment of the information recording system is characterized in that an information-recording system as claimed in any one of the Claims 1 to 5. The track modulation used in this embodiment has the advantage that technically it can be realised very easily. Therefore, it is very attractive to record the data required for recording by means of this track modulation. This is in contrast with the recording of this data by means of for example track depth modulation, for example in the form of a pit structure, which is technically far more difficult. The information recording system in accordance with the invention is particularly advantageous if a number of different predetermined radial positions must be known when information is recorded on a record carrier having a concentric track pattern. This occurs inter alia when information is recorded in conformity with the CD standard, in which case the information signals should be recorded in a program area whose beginning should be situated at a radial position prescribed by the standard and a table of contents specifying the addresses of specific portions of the recorded information should be recorded in an area whose beginning is also situated at a prescribed radial position. In that case a predetermined address can be assigned to one of the radial positions, while the addresses of track portions having the other prescribed radial position can be indicated by means of auxiliary codes.

In another embodiment of the information recording system, which is also very suitable for standard CD signals, the address of the extreme location where recording of the lead out track should start is incorporated in the auxiliary signal, so that by means of the auxiliary signal being read the recording device can determine the track portion where recording of the lead-out signal may commence, in such a way that the beginning of the lead-out track is situated before the address specified in the auxiliary signal.

Further embodiments and advantages thereof will now be desdribed in more detail, by way of example, with reference to Figs. 1 to 9, in which

Fig. 1 shows a record carrier provided with a servo-track which exhibits a track modulation,

Fig. 2 illustrates a suitable format for an auxiliary signal which is recorded in the servo track by means of the track modulation,

Fig. 3 gives a code word represented by the auxiliary signal,

Fig. 4 shows a layout of a record carrier on which a standard CD signal has been recorded,

Fig. 5 gives the address codes as a function of the radial position of the track portions in which they are recorded,

Fig. 6 gives a number of bit combinations used in the auxiliary codes and address codes,

Fig. 7 shows a track portion in which the positions of the recorded auxiliary codes and address codes are indicated diagrammatically,

Fig. 8 shows an embodiment of an information-recording system in accordance with the invention, and

Fig. 9 is a flow chart of a control program for controlling the process of recording information by means of the information-recording system shown in Fig. 8.

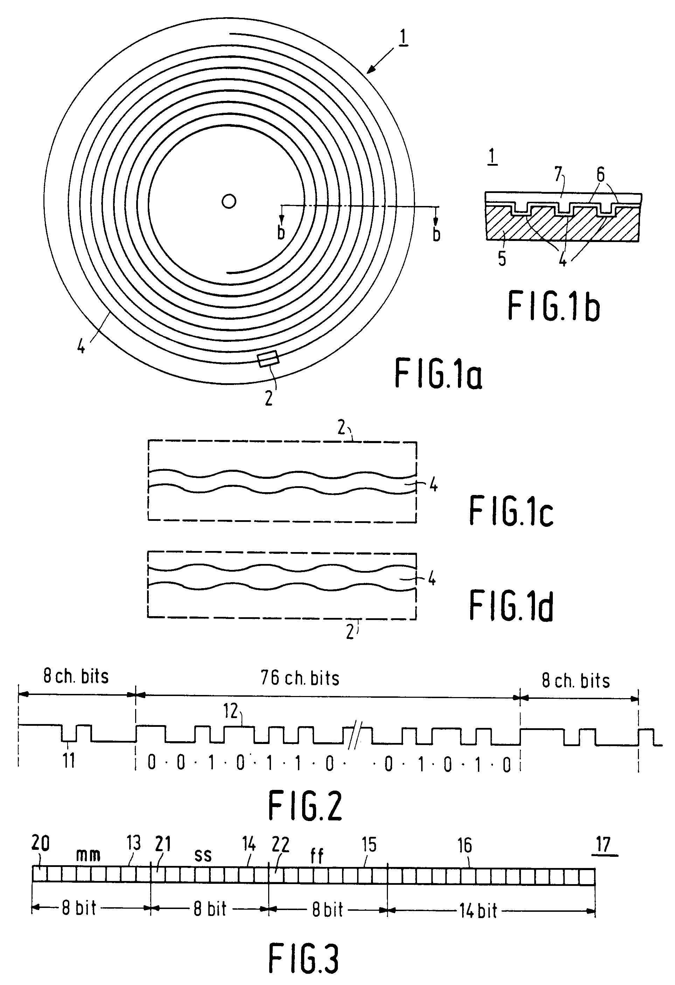

Fig. 1 shows possible embodiments of a record carrier 1 of an inscribable type as described, for example, in Netherlands Patent Application NL-A-8800152 (PHN 12.399) corresponding to EP-A-0 325 330. Both documents are published after the priority data of the present patent. Fig. 1a is a plan view. Fig. 1b shows a small part of a sectional view taken on the line b-b. Figs. 1c and 1d are highly enlarged plan views of a part 2 of a first embodiment and a second embodiment of the record carrier 1. The record carrier 1 has a track 4, constituted for example by a preformed groove or ridge. The track 4 is intended for recording an information signal. For the purpose of recording the record carrier 1 has been provided with a recording layer 6 deposited on a transparent substrate 5 and coated with a protective layer 7. The recording layer 6 is of a material which, when exposed to suitable radiation of adequate intensity, is subjected to an optically detectable change. Such a layer may be, for example, a thin layer of a metal such as tellurium. By exposure to laser radiation of suitable intensity this metal layer can be melted locally, so that at this location said layer will have a different reflection coefficient. When the track 4 is scanned by a radiation beam whose intensity is modulated in conformity with the information to be recorded an information pattern of optically detectable recording marks is obtained, which pattern is representative of the information.

The layer may alternatively consist of other radiation-sensitive materials, for example magneto-optic materials, a dye, or materials which upon heating are subjected to a structural change, for example from amorphous to crystalline or vice versa. A survey of such materials is given in the book "Principles of optical disc systems", Adam Hilgar Ltd., Bristol and Boston, pp. 210-227.

The track 4 enables a radiation beam which is aimed at the record carrier 1 for the purpose of recording the information to be positioned accurately on the track 4, in other words it enables the position of the radiation beam in a radial direction to be controlled via a tracking system employing the radiation reflected from the record carrier 1. The measurement system for measuring the radial position of the radiation spot on the record carrier may correspond to one of the systems as described in the above mentioned book "Principles of optical disc systems".

The auxiliary signal is recorded in the track 4 by means of a preformed track modulation, suitably in the form of a sinusoidal track excursion as shown in Fig. 1c. However, other track modulations such as for example track width modulation (Fig. 1d) are also suitable. Since a track excursion is very easy to realise in the manufacture of the record carrier it is preferred to use a track modulation in the form of such a track excursion.

It is to be noted that Fig. 1 shows the track modulation to a highly exaggerated scale. In reality it is found that in the case of a track width of approximately $10^{-6}$ metres an excursion having an amplitude of approximately $30.10^{-9}$ metres is adequate for a reliable detection of the scanning beam modulation. An excursion of small amplitude has the advantage that the distance between adjacent servo tracks can be small. Fig. 1 also shows the track pitch (the spacing between the track centres) to a substantially larger scale than in reality. In practice the track pitch is approximately $1.6\ 10^{-6}$ metres.

An attractive track modulation is that in which the frequency of the track modulation is modulated in conformity with the auxiliary signal. However, other track modulations as described in Netherlands Patent Application NL-A-8701632 (PHN 12.181) are also possible.

Fig. 2 gives an example of a suitable auxiliary signal comprising code signals 12 which alternate with synchronising signals 11. Each code signal 12 may comprise a "biphase-mark" modulated signal having a length of 76 channel bits, which signal is representative of a code word comprising 38 code bits. In the case of a "biphase-mark" modulated signal each code bit is represented by two successive channel bits. A code bit of a first logic value, in the present example "0", is represented by two bits of the same logic value. The other logic value ("1") is represented by two channel bits of different logic values. Moreover, the logic value of the "biphase-mark" modulated signal changes after every pair of channel bits (see Fig. 2), so that the maximum number of successive bits of the same logic value is two at the most. The synchronising signals 11 are selected in such a way that they can be distinguished from the code signals 12. This is achieved when the maximum number of successive bits of the same logic value in the synchronising signals 11 is selected to be three.

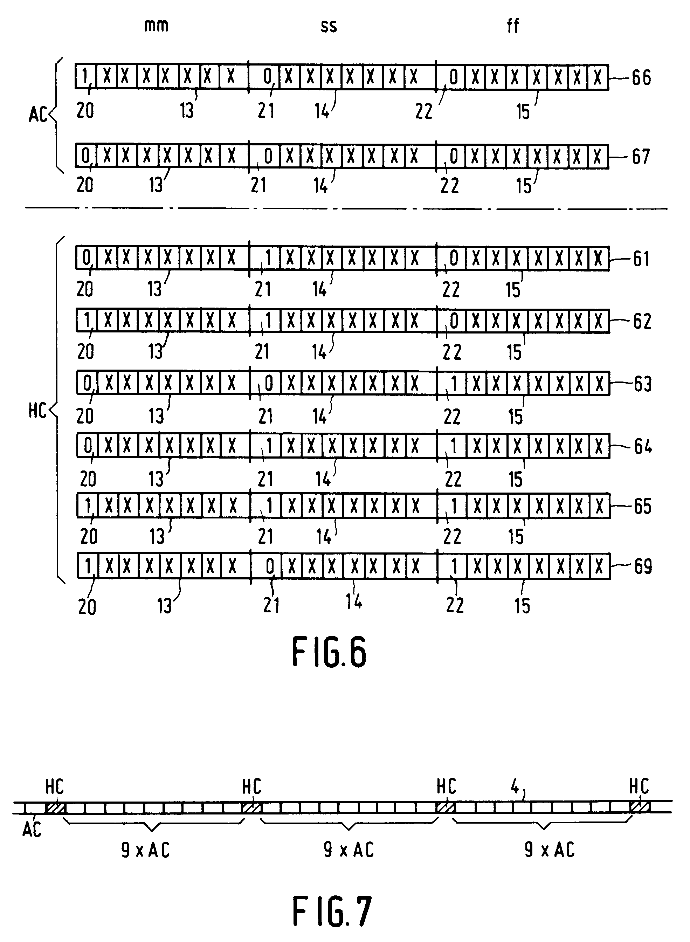

Fig. 3 shows a suitable format of 38-bit code words 17 represented by the code signals 12. The code word 17 shown therein comprises three bytes 13, 14 and 15 of 8 bits each and a 14-bit group 16. The most significant bits of the bytes 13, 14 and 15 bear the reference numerals 20, 21 and 22 respectively. The bytes 13, 14 and 15 are used as information bytes and the 14-bit group 16 comprises parity bits for the purpose of error detection. The values represented by the bytes 13, 14 and 15 are referenced mm, ss and ff respectively. Preferably, the 38-bit code words are recorded in the track at equidistant positions and comprise address codes AC and auxiliary codes HC which can be distinguished from eachother and which are recorded in the track, for example in the sequence illustrated in Fig. 7. In Fig.7 a constant number, in the present case 9, of address codes AC is always followed by an auxiliary code HC. However, it is to be noted that the number of address codes AC between the auxiliary codes HC may also be variable instead of constant. The address codes may comprise for example a time code, indicating the time required, when the track 4 is scanned at the nominal scanning speed, to bridge the distance between a reference position in the track and the location where the address code is recorded. Preferably the selected address code is a time code identical to the absolute time code as included in the subcode Q-channel during recording of a CD signal. In that case the value mm specifies a number of minutes and the values ss and ff denote a number of seconds and a number of frames respectively, the specified number of seconds varying between 0 and 59 and the specified number of frames varying between 0 and 74. The number of minutes, seconds and frames may for example BCD encoded in the bytes 13, 14 and 15.

The advantage of the address code described above becomes apparent in particular in the case that a CD signal is to be recorded on the record carrier. In that case the absolute time code to be included in the subcode Q-channel can be derived directly from the address code being read, as is described in detail in Netherlands Patent Application NL-A-880152 (PHN 12.399).

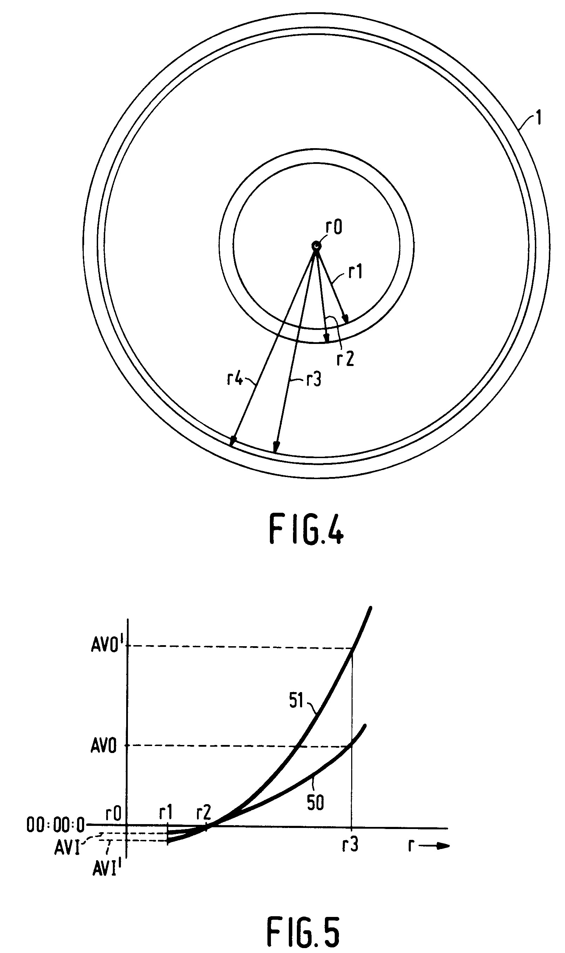

When a standard CD signal is recorded three different areas can be distinguished on the record carrier, as is illustrated in Fig. 4, namely:

1) a program area situated between the radial positions bounded by the radii r2 and r3. In this area the data signals are recorded;

2) a lead-in area situated between the radial positions bounded by the radii r1 and r2. This area comprises a lead-in track in which the addresses of the different data signals in the program area are stored in the form of a table of contents, as is described, for example, in Nederlands Patent Application NL-A-8900766 (PHN 12.887) corresponding to EP-A-0 390 268;

3) a lead-out area situated between the radial positions bounded by the radii r3 and r4. This area comprises a lead-out track in which a lead-out signal which can be distinguished from the data signals is recorded to mark the end of the program area.

The radial positions of the beginning of the lead in area and the beginning of the program area are prescribed by the CD standard, the required distance from the beginning of the lead in area to the centre of rotation r0 being 23 mm, while the distance from the beginning of the program area to the centre of rotation r0 should be 25 mm. Moreover, the lead-out area is required to begin before a predetermined radial position.

In the CD signal the beginning of the program area is indicated by the absolute time code 00:00:00 in the subcode Q-channel. In the program area the absolute time code starts with a value 00:00:00.

For an optimum use of the address code recorded by means of the track modulation it is desirable that the values of the address codes recorded in the track vary identically to the absolute time code in the CD signal to be recorded. This means that the value of the address code in the track portion whose the radial position is indicated by r2 is 00:00:00. Preferably the value of the address code in the lead-in area increases to a value 99:59:74 at the end of this area. This has the advantage that the value 00:00:00 of the first address code in the program area directly follows the value 99:59:74 of the last address code in the lead-in area. The resulting variation of the values of the address codes is denoted by the reference numeral 50 in Fig. 5.

The value of the address code at the radial position indicated by r1 is referenced AVI and the value of the address code at the radial track position defined by r3 is referenced AVO.

It is to be noted that the values of the address codes at the radial positions defined by the radii r1 and r3 depend strongly on the track pitch and the nominal scanning speed, which may be selected between 1.2 and 1.4 m/s in conformity with the CD standard. Indeed, the total track length between two radial positions is inversely proportional to the track pitch and the normal scanning speed. By way of illustration a line 51 in Fig.5 shows the variation of address code value for a comparatively small track pitch or a low scanning speed. The associated values of the address codes at the radial positions defined by r1 and r3 are referenced AVI' and AVO' respectively. As is apparent from Fig. 5 the radial positions defined by r1 and r3 do not correspond to each other for different record carriers on account of the permissible differences in track pitch and scanning speed in accordance with the CD standard. However, for recording CD signals in conformity with the CD standard it is desirable that the radial positions defined by r1 and r3 can be determined accurately. This can be achieved for example by marking the radial positions defined by r1 and r3 with specific auxiliary codes recorded in the track at these radial positions. However, it is to be preferred to record auxiliary codes in the track in the actual lead-in area and/or program area, which auxiliary codes refer to the address codes of the values AVI and AVO which define radial positions indicated by r1 and r3. For a given track pitch and scanning speed the values of AVI and AVO can be pre-calculated and can thus be recorded during recording of the servo track in the mastering process.

This can be achieved simply by including the values of AVI and AVO in the auxiliary codes. The last mentioned possibility is to be preferred because in that case the positions where the auxiliary codes are recorded can be selected freely. Moreover, it is then possible to divide the auxiliary codes containing the values AVI and AVO uniformly along the track, so that the auxiliary codes with the references to AVO and AVI can always be found rapidly.

As already stated, it should be possible for the auxiliary codes and the address codes to be distinguished from one another. This can be achieved, for example, if the code signals representing the address codes and the code signals representing the auxiliary codes are preceded by different synchronisating signals 11. A number of different synchronisation signals 11 which may be used in conjunction with the code signals 12 described herein are described inter alia in Netherlands Patent Application NL-A-8801275 (PHN 12.571) corresponding to EP-A-0 342 748.

However, the auxiliary codes can also be distinguished from the address codes if the auxiliary code contains specific bit combinations in which do not occur in the address code. If the time codes described above are used for the address codes, this is possible by means of a bit combination comprising the most significant bits 20, 21 and 22 for the three bytes 12, 14 and 15, which will be explained with reference to Fig. 6.

In Fig. 6 the reference numeral 66 denotes the possible bit combination of the address codes in the lead-in area. On account of the high value mm of the byte 13 in the lead-in area the most significant bit 20 of the byte 13 in this area will always have the logic value 1. The value ss of the byte 14 varies between 0 and 59, which in the case of the BCD encoding means that the most significant bit 21 of the byte 14 always has the logic value 0. The value ff of the byte 15 varies between 0 and 74, so that the most significant bit 22 for the byte 15 also always has the logic value 0. The other bits of the bytes 13, 14 and 15 in the bit combination 66 may assume either the logic value 0 or the logic value 1, which is indicated by the symbol "x".

The reference numeral 67 denotes the possible bit combinations of the bytes 13, 14 and 15 of the address code in the track portion situated outside the lead in area. For the same reasons as in the case of the address code in the lead in area the most significant bits 21 and 22 of the bytes 14 and 15 in the bit combination 67 always have the logic value 0. Moreover, on account of the limited playing time of the record carriers address codes having a value for which the most significant bit 20 in the bit combination 67 assumes the value 1 do not occur in the program area.

The reference numerals 61, 62, 63, 64, 65 and 69 represent a number of bit combinations for which the combination of the most significant bits 20, 21 and 22 of the bytes 13, 14 and 15 differ from the corresponding bit combinations in the address codes. Therefore the bit combinations may be used for the auxiliary codes HC, in which case the seven least significant bits of the bytes 13, 14 and 15 can represent additional information. For example the bit combinations 61 can be employed to represent the address code of the value AVO. Since the most significant bits of the bytes 13, 14 and 15 of the address codes for AVO always assume the same logic 0 value, the value of AVO may be represented completely by the seven least significant bits of the bytes 13, 14 and 15 in the bit combination 61.

Similarly, the value AVI may be represented by the bit combination 62. The bit combinations 63, 64 and 65 can be employed for auxiliary codes with which other additional information is recorded in the track, such as for example the write energy required for recording, the type of record carrier, the write strategy etc.

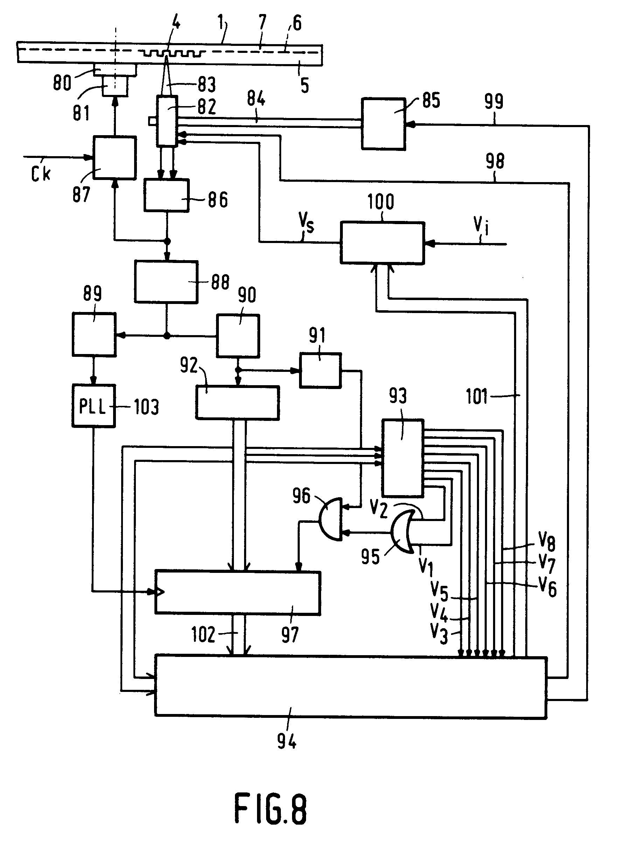

Fig.8 shows an embodiment of a recording device for recording data signals Vi on the record carrier 1 described above. The record carrier 1 is placed on a turntable 80, which is rotated by means of a motor 81. An optical write/read head 82 of a customary type is arranged opposite the carrier 1 to read and/or record information from/in the track 4 by means of a radiation beam 83 which is aimed at the recording layer 6. The read head 82 is movable in a radial direction relative to the record carrier 1 by means of a system which comprises, for example, a motor 85 and a spindle 84. The beam 83 is focused on the recording layer 6 in a customary manner and is kept on the track 4 with the aid of customary focusing and tracking systems, not shown. As the track is scanned the beam is modulated in conformity with the preformed track modulation. In the read head 82 the beam which is thus modulated is detected by means of customary radiation-sensitive detectors, which generate signal currents from which a detection signal Vd is derived by means of a detection circuit in a manner as described, for example, in Netherlands Patent Application NL-A-870065 (PHN 12.063), frequency of said detection signal corresponding to the frequency of the track modulation. The detection signal Vd is applied to a motor control circuit 87 to control the speed of the motor in such a way that the frequency of the detection signal Vd remains equal to the frequency of a reference clock signal Ck. The motor control circuit 87 may comprise, for example, a phase detector for detecting the phase difference between the detection signal Vd and the reference clock signal Ck, and a power supply circuit for powering the motor with a voltage whose value depends on the phase difference thus detected.

The detection signal Vd is also applied to an FM demodulator 88 to recover the auxiliary signal Vh from the detection signal Vd. The recovered auxiliary signal Vh is applied to a synchronising-signal detection circuit 89 for detecting the synchronising signals 11 in the auxiliary signal Vh and a "biphase-mark" demodulator 90 for converting the auxiliary signals into the 38-bit code words 17. The bits of the 38-bit code words 17 are serially applied to an error-detection circuit 91, which by means of the parity bits of the bit group 16 determines whether the code word is received without errors. Moreover, the serially supplied code words 17 are applied to serial-parallel converter 92, on whose output the bits of the bytes 13, 14 and 15 are available in parallel form. The most significant bits 20, 21 and 22 of the 3 bytes 13, 14 and 15 applied to the outputs of the converter 92 are fed to a customary decoder circuit 93, which generates eight signals V1, V2, V3, V4, V5, V6, V7, V8, the relationship between the signals V1, ... V8 and the most significant bits 20, 21 and 22 of the bytes 13, 14 and 15 being given in the following Table 1.

## TABLE 1.

| | MSB | | |
| --- | --- | --- | --- |
| | 20 | 21 | 22 |
| V1 | 1 | 0 | 0 |
| V2 | 0 | 0 | 0 |
| V3 | 0 | 1 | 0 |
| V4 | 1 | 1 | 0 |
| V5 | 0 | 0 | 1 |
| V6 | 0 | 1 | 1 |
| V7 | 1 | 1 | 1 |
| V8 | 1 | 0 | 1 |

The signals V3, V4, V5, V6, V7 and V8 are applied to a control circuit 94 for controlling the recording device. The control circuit 94 may comprise a microcomputer of a customary type, which is loaded with suitable control program to be described hereinafter. The signals V1 and V2 on the output of the decoder circuit 93 are applied to a two-input OR gate 95. The signals V1 and V2 indicate that the bytes 13, 14 and 15 on the output of the converter 92 represent an address code within the lead-in area or an address code outside the lead-in area, so that the output signal of the OR gate 95 always indicates whether the output signal of the converter 92 concerns address information. The output signal of the OR gate 95 is applied to an input of the two-input AND gate 96. A signal from the error-detection circuit 90, which signal each time indicates by means of a pulse that the received code word 17 is correct, is applied to the other input of the AND gate 96.

Thus, by means of a pulse the AND gate 96 each time indicates whether the information on the output of the converter represents a correctly read address code. The output signal of the AND gate 96 is applied to a parallel load-enable input of a counting circuit 97. The bytes 13, 14 and 15 appearing on the outputs of the converter 92 are applied to the parallel inputs of the counting circuit 97, so that upon every receipt of a correctly read address code the counting circuit 97 is loaded with the address code being read. The counting circuit 97 is of a type which in response to a clock pulse on a clock input of the counter increments the count of the counter by one. A clock signal which is in synchronism with the synchronisation signals 11 being read is applied to said clock input, which clock signal is derived from an output signal of the synchronising signal detection circuit 89 by means of a customary phase locked loop circuit 103.

The counting circuit 97 operates as follows. In response to the clock signal pulses supplied by the phase locked loop circuit 103 the count is each time incremented by one in synchronism with the operation of reading the code values recorded in the track. This means that as soon as the count has a value corresponding to the address codes being read the value of the count will follow the values of the address code being read regardless of whether the subsequent address codes are read incorrectly or the next code word 17 being read does not contain an address code AC but an auxiliary code HC. If at the beginning the count does not correspond to the address code being read the counter is responsive to the next pulse on the output of the AND gate 96 to be loaded with the correct value supplied by the converter 92 via its parallel inputs.

As long as the count correspond to the address code being read the pulses on the output of the AND gate will have no effect because the count then already corresponds to the address code applied to the parallel inputs of the counting circuit. This method of deriving the address codes have the advantage that always an address code corresponding to the position of the track being scanned is available, even in the case that instead of an address code AC an auxiliary code HC is recorded in the track. This also means that the track portions in which the address codes are recorded remain addressable. The bytes 13, 14 and 15 on the output of the converter 92 are applied not only to the parallel inputs of the counting circuit 97 but also the the control circuit 94.

Moreover, the control circuit 94 is coupled to the write/read head 82 and the motor 85 via signal lines 98 and 99. The read head can be set to a read mode or a write mode via the signal line 98. In the read mode the intensity of the radiation beam 83 remains at a constant small value, which is too small to bring about the optically detectable change in the recording layer 6. In the write mode the intensity of the radiation beam is switched in accordance with a write signal Vs between a lower intensity level, which does not bring about an optically detectable change, and a high intensity level (also referred to as write energy), which gives rise to an optically detectable change in the recording layer 6, so that an optically detectable pattern corresponding to the write signal Vs is formed in the recording layer 6. The write signal Vs is generated by an EFM modulation circuit 100, which converts a data signal Vi and the subcode information applied via a bus 101 into an EFM modulated signal in conformity with the CD standard, from which the write signal Vs is derived in a manner as described in detail in, for example,Netherlands Patent Application NL-A-8700934 (PHQ 87.009). Moreover, the high write level (write energy) can be set to a value indicated in the auxiliary code via signal line 8.

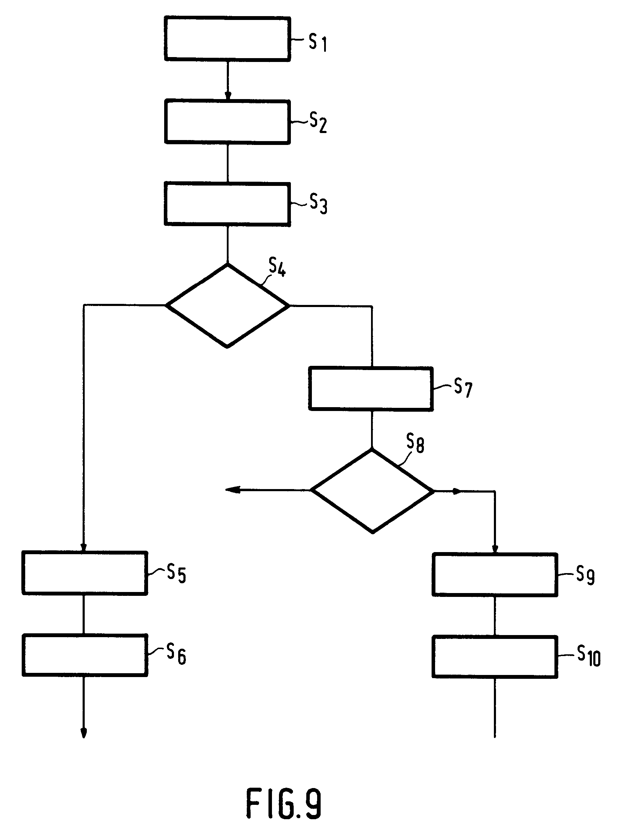

The process of recording information on the record carrier is controlled by the control circuit 94, which for this purpose is loaded with a suitable control program. Such a control program may comprise, for example the steps indicated in the flow chart in Fig. 9.

Step S1 is performed immediately after the record carrier 1 has been loaded into the recording device. In this step S1 the read/write head 82 is set to the read mode and by means of the signals V3 and V4 on the output of the decoder circuit 96 it is ascertained whether the code word supplied to the output of the converter 92 comprises an auxiliary code containing the address values AVO or AVI. When the presence of these auxiliary code is detected the values of AVO and AVI are stored in a memory of the control circuit.

Subsequently, in step S2, the read/write head 82 is directed towards the track portion containing the address code of the value AVI with the aid of the address code being read, and by means of the table of contents recorded in this track portion the address in the program area is determined before recording of the next data signal can commence. The manner in which said start address can be specified in such a table of contents is described in detail in Netherlands Patent Application NL-A-8900766 (PHN 12.887). Said Patent Application describes how a provisional table of contents can be recorded in the lead-in area. As soon as all the desired data signals have been recorded a definitive table of contents is recorded in the lead-in area in a manner as prescribed by the CD standard.

In step S3 the read/write head 82 is directed towards the track portion having the start address specified in the provisional table of contents by means of the address codes being read. When this track portion is reached the read/write head 82 is set to the write mode, after which the data signal Vi applied to the EFM modulation circuit 100 can be recorded. For the absolute time codes to be inserted into the subcode Q-channel of the recorded signal the counts of the counting circuit 97 may be used, which modes are read by the control circuit 94 via a bus 102 and which are subsequently applied to the EFM modulation circuit 100 via the bus 101. Moreover, the value of each count being read is compared with the value AVO and if the count is larger than or equal to the value AVO recording of the data signal is discontinued. Recording is also terminated once the complete data signal to be recorded has been recorded. Upon termination of the recording process step S4 is performed, in which it is ascertained whether recording has been discontinued as a result of the track portion specified by the value AVO being reached. If this is the case, step S5 is performed, in which the lead-out signal is recorded during a predetermined time interval, the subcode information characterizing the lead-out signal being applied to the EFM modulation circuit by the control circuit 94. After recording of the lead-out signal the write/read head 82 is directed towards the lead-in area in step S6 to record the definitive table of contents in the lead-in area.

If during step S4 it is ascertained that recording of the data signal has not been discontinued as a result of the track portion having the address code with the value AVO being reached, the provisional table of contents is recorded in the lead-in area during step S7. Subsequently, it is checked in step S8 whether further data signals are to be recorded on the record carrier. If this is the case the program is terminated. If this is not the case, the definitive table of contents is recorded in the lead-in area in step S9 and the lead out signal is recorded in step S10, after which the program is terminated.

In the foregoing the invention has been illustrated for an optical recording system for recording a standard CD signal on a record carrier comprising substantially concentric tracks. However, it is to be noted that the invention equally applies to the recording of signals in linear tracks. Moreover, the invention may also be applied to the recording of other data signals than CD signals. Neither is the scope of the invention limited to optical recording systems. It may equally be applied to magneto-optical recording systems or magnetic recording systems where address codes have been recorded in the track by means of a previously applied track modulation.

## Claims

1. An information-recording system, comprising a record carrier (1) of an inscribable type, having a preformed track (4) in which an auxiliary signal comprising a sequence of codes (12) is recorded by means of a preformed track modulation, which codes comprise address codes (AC) specifying the addresses of the track portions in which said address codes (AC) are recorded, and a recording device for recording information in the track (4) provided with the track modulation, which recording device comprises read means (82,86,88) for reading the auxiliary signal, characterized in that the sequence of codes also comprises auxiliary codes (AC) which can be distinguished from the address codes, and which sequence can be obtained by replacing in a sequence of address codes with consecutive address values a plurality of said address codes by auxiliary codes, the recording device comprising means (93,94,95,96,97) for selectively extracting the address codes (AC) and the auxiliary codes (HC) from the auxiliary signal, the auxiliary codes comprising control data for the purpose of controlling the recording process, the recording device being adapted to control the recording process in dependence upon the extracted auxiliary codes (HC).

2. An information recording system as claimed in Claim 1, characterized in that the control data specifies a desired write energy setting for recording the information, the recording device comprising means (94, 100) for adjusting the write energy, the recording device being further adapted to adjust the write energy in dependence upon the extracted auxiliary codes (HC).

3. An information recording system as claimed in Claim 1 or 2, characterized in that the address codes (AC) and the auxiliary codes (HC) have the same data format.

4. An information-recording system as claimed in Claim 1 to 3, characterized in that (AC), the address codes (AC) each time indicating the distance, measured in the track direction, between the location where they have been recorded and a specific reference position, the recording device comprising synchronising means (89, 103) for deriving a clock signal from the auxiliary signal being read, which clock signal is in synchronism with the process of reading the equidistantly recorded address (AC) and auxiliary codes (HC), a counter (97) controlled by the clock signal, and means (91, 96) responsive to a correctly read address code to set the count to a value corresponding to the address code being read.

5. An information-recording system as claimed in Claim 4, characterized in that the address codes (AC) comprise absolute time codes specifying said distance as a playing time.

6. An information-recording system as claimed in any one of the Claims 3, 4 or 5, characterized in that the auxiliary code (HC) can be distinguished from the address codes by specific bit combinations which do not occur in the address codes.

7. An information-recording system as claimed in any one of the Claims 1 to 6, characterized in that the track modulation comprises a periodic track excursion in a direction transverse to the track direction, the frequency of said periodic track excursion being modulated in conformity with the auxiliary signal, the read means (82,86,88) comprising detection means (86) for detecting the track modulation and for generating a detection signal of a frequency corresponding to the frequency of the detected track modulation, and a frequency demodulator (88) for detecting frequency variations in the detection signal for the purpose of recovering the auxiliary signal.

8. An information-recording system as claimed in any one of the Claims 2 to 7, characterized in that the track (4) comprises track portions which are substantialy concentric with a centre of rotation (20), the control data indicating the address code of at least a track portion having a predetermined radial position (21, 23) relative to said centre (20).

9. An information-recording system as claimed in Claim 8, characterized in that the recording device comprises means for recording contents information depending on the auxiliary codes being read, which information indicates the addresses of recorded portions of the information signal, in a track portion having a predetermined radial (21) position specified by the auxiliary codes (HC).

10. An information-recording system as claimed in Claim 9, characterized in that the predetermined radial position (21) is situated at the inner periphery of the track pattern formed by the concentric track portions.

11. An information-recording system as claimed in any one of the Claims 8 to 10, characterized in that the recording device comprises means for recording a lead out signal indicating the end of the recorded information signal, and means for determining, depending on the auxiliary codes (HC) being read, the track portion where the recording of the lead-out signal should commence in such a way that the beginning of the recording of the lead-out signal is situated before a position (23) indicated by auxiliary codes.

12. An information-recording system as claimed in any one of the Claims 8, 9 or 10, characterized in that the reference position is situated in a track portion having a predetermined radial position (21, 23).

13. A recording device comprising by all technical recording device features as defined in any one of the preceding claims.

14. A record carrier comprising all record carrier features as defined in any one of the claims 1 to 13.

**Patentansprüche**

1. Informationsaufzeichnungssystem mit einem Aufzeichnungsträger (1) einer beschreibbaren Art, mit einer vorgeformten Spur (4), in der ein eine Folge von Codes (12) umfassendes Hilfssignal mit Hilfe einer vorgebildeten Spurmodulation aufgezeichnet ist, wobei die Codes Adressencodes (AC) umfassen, die die Adressen der Spurabschnitte spezifizieren, in denen die genannten Adressencodes (AC) aufgezeichnet sind, und eine Aufzeichnungseinrichtung zum Aufzeichnen von Information in der mit der Spurmodulation versehenen Spur (4), wobei die Aufzeichnungseinrichtung Lesemittel (82, 86, 88) zum Lesen des Hilfssignals enthält, dadurch gekennzeichnet, daß die Folge von Codes auch Hilfscodes (HC) enthält, die von den Adressencodes unterschieden werden können, und wobei die Folge erhalten werden kann, indem in einer Folge von Adressencodes mit aufeinanderfolgenden Adreßwerten eine Anzahl der genannten Adressencodes durch Hilfscodes ersetzt werden, wobei die Aufzeichnungseinrichtung Mittel (93, 94, 95, 96, 97) zur selektiven Entnahme der Adressencodes (AC) und der Hilfscodes (HC) aus dem Hilfssignal umfaßt, wobei die Hilfscodes Steuerungsdaten zur Steuerung des Aufzeichnungsprozesses umfassen und die Aufzeichnungseinrichtung zur Steuerung des Aufzeichnungsprozesses in Abhängigkeit von den entnommenen Hilfscodes (HC) eingerichtet ist.

2. Informationsaufzeichnungssystem nach Anspruch 1, dadurch gekennzeichnet, daß die Steuerungsdaten eine gewünschte Schreibenergieeinstellung zum Aufzeichnen der Information spezifizieren, wobei die Aufzeichnungseinrichtung Mittel (94, 100) zum Einstellen der Schreibenergie umfaßt, wobei die Aufzeichnungseinrichtung weiterhin zum Einstellen der Schreibenergie in Abhängigkeit von den entnommenen Hilfscodes (HC) eingerichtet ist.

3. Informationsaufzeichnungssystem nach Anspruch 1 oder 2, dadurch gekennzeichnet, daß die Adressencodes (AC) und die Hilfscodes (HC) das gleiche Datenformat haben.

4. Informationsaufzeichnungssystem nach Anspruch 1 bis 3, dadurch gekennzeichnet, daß die Adressencodes (AC) jedesmal den in Spurrichtung gemessenen Abstand zwischen dem Ort, wo sie aufgezeichnet worden sind und einer bestimmten Bezugsposition angeben, wobei die Aufzeichnungseinrichtung Synchronisationsmittel (89, 103) zum Ableiten eines Taktsignals aus dem gelesenen Hilfssignal umfaßt, welches Taktsignal zu dem Prozeß des Auslesens der in gleichen Abständen aufgezeichneten Adressencodes (AC) und Hilfscodes (HC) synchron ist, sowie einen von dem Taktsignal gesteuerten Zähler (97) und auf einen einwandfrei gelesenen Adressencode ansprechende Mittel (91, 96), zum Einstellen des Zählerstandes auf einen dem gelesenen Adressencode entsprechenden Wert.

5. Informationsaufzeichnungssystem nach Anspruch 4, dadurch gekennzeichnet, daß die Adressencodes (AC) Absolutzeitcodes umfassen, die den genannten Abstand als Abspieldauer spezifizieren.

6. Informationsaufzeichnungssystem nach einem der Ansprüche 3, 4 oder 5, dadurch gekennzeichnet, daß der Hilfscode (HC) von den Adressencodes mittels einer speziellen, nicht unter den Adressencodes vorkommenden Bitkombination unterschieden werden kann.

7. Informationsaufzeichnungssystem nach einem der Ansprüche 1 bis 6, dadurch gekennzeichnet, daß die Spurmodulation eine periodische Spurauslenkung in einer Richtung quer zur Spurrichtung umfaßt, wobei die Frequenz der genannten Spurauslenkung entsprechend dem Hilfssignal moduliert ist, die Lesemittel (82, 86, 88) Detektionsmittel (86) zum Detektieren der Spurmodulation und zum Generieren eines Detektionssignals mit einer der Frequenz der detektierten Spurmodulation entsprechenden Frequenz umfassen, und einen Frequenzdemodulator (88) zum Detektieren von Frequenzänderungen in dem Detektionssignal zur Rückgewinnung des Hilfssignals.

8. Informationsaufzeichnungssystem nach einem der Ansprüche 2 bis 7, dadurch gekennzeichnet, daß die Spur (4) Spurabschnitte umfaßt, die nahezu konzentrisch zu einem Drehmittelpunkt (r0) liegen, wobei die Steuerungsdaten den Adressencode mindestens eines Spurabschnitts mit einer vorbestimmten radialen Position (r1, r3) relativ zu dem genannten Mittelpunkt (r0) angeben.

9. Informationsaufzeichnungssystem nach Anspruch 8, dadurch gekennzeichnet, daß die Aufzeichnungseinrichtung Mittel zum Aufzeichnen von von den gelesenen Hilfscodes abhängende Inhaltsinformation umfaßt, wobei die Information die Adressen aufgezeichneter Abschnitte des Informationssignals in einem Spurabschnitt mit einer von den Hilfscodes (HC) spezifizierten vorbestimmten radialen Position (r1) umfaßt.

10. Informationsaufzeichnungssystem nach Anspruch 9, dadurch gekennzeichnet, daß die vorbestimmte radiale Position (r1) am inneren Rand des von den konzentrischen Spurabschnitten gebildeten Spurmusters liegt.

11. Informationsaufzeichnungssystem nach einem der Ansprüche 8 bis 10, dadurch gekennzeichnet, daß die Aufzeichnungseinrichtung Mittel zum Aufzeichnen eines Auslaufsignals umfaßt, das das Ende des aufgezeichneten Informationssignals angibt, sowie Mittel zum Bestimmen, in Abhängigkeit von den gelesenen Hilfscodes (HC), des Spurabschnitts, bei dem das Aufzeichnen des Auslaufsignals anfangen sollte, so, daß der Anfang des Aufzeichnens des Auslaufsignals vor einer durch Hilfscodes angegebenen Position (r3) liegt.

12. Informationsaufzeichnungssystem nach einem der Ansprüche 8, 9 oder 10, dadurch gekennzeichnet, daß die Bezugsposition in einem Spurabschnitt mit vorbestimmter radialer Position (r1, r3) liegt.

13. Aufzeichnungseinrichtung mit allen technischen Aufzeichnungseinrichtungsmerkmalen nach einem der vorhergehenden Ansprüche.

14. Aufzeichnungsträger mit allen Aufzeichnungsträgermerkmalen nach einem der Ansprüche 1 bis 13.

**Revendications**

1. Système d'enregistrement d'informations comprenant un support d'enregistrement (1) de type inscriptible comportant une piste préformée (4), sur laquelle un signal auxiliaire comprenant une séquence de codes (12) est enregistré à l'aide d'une modulation de piste préformée, ledit code comprenant des codes d'adresse (AC) spécifiant les adresses des parties de pistes dans lesquelles lesdits codes d'adresse (AC) sont enregistrés, et un dispositif d'enregistrement pour enregistrer les informations sur la piste (4) pourvue de la modulation de piste, ledit dispositif d'enregistrement comprenant des moyens de lecture (82, 86, 88) pour lire le signal auxiliaire, caractérisé en ce que la séquence de codes comprend également des codes auxiliaires (AC) qui peuvent être distingués des codes d'adresse, ladite séquence pouvant être obtenue en remplaçant dans une séquence de codes d'adresse comportant des valeurs d'adresse consécutives, une pluralité desdits codes d'adresse par des codes auxiliaires, le dispositif d'enregistrement comprenant des moyens (93, 94, 95, 96, 97) pour extraire de manière sélective les codes d'adresse (AC) et les codes auxiliaires (HC) du signal auxiliaire, les codes auxiliaires comprenant des données de commande à l'effet de commander le processus d'enregistrement, le dispositif d'enregistrement étant à même de commander le processus d'enregistrement en fonction des codes auxiliaires extraits (HC).

2. Système d'enregistrement d'informations selon la revendication 1, caractérisé en ce que les données de commande spécifient un réglage souhaité de l'énergie d'écriture pour enregistrer des informations, le dispositif d'enregistrement comprenant des moyens (94, 100) pour ajuster l'énergie d'écriture, le dispositif d'enregistrement étant, en outre, à même d'ajuster l'énergie d'écriture en fonction des codes auxiliaires extraits (HC).

3. Système d'enregistrement d'informations selon la revendication 1 ou 2, caractérisé en ce que les codes d'adresse (AC) et les codes auxiliaires (HC) ont le même format de données.

4. Système d'enregistrement d'informations selon les revendications 1 à 3, caractérisé en ce que les codes d'adresse (AC) indiquant chaque fois la distance, mesurée dans la direction de la piste, entre l'endroit où ils ont été enregistrés et une position de référence spécifique, le dispositif d'enregistrement comprenant des moyens de synchronisation (89, 103) pour tirer un signal d'horloge du signal auxiliaire lu, ledit signal d'horloge étant en synchronisme avec le processus de lecture des codes d'adresse (AC) et des codes auxiliaires (HC) enregistrés à équidistance, un compteur (97) commandé par le signal d'horloge et des moyens (91, 96) sensibles à un code d'adresse lu correctement pour régler le comptage à une valeur correspondant au code d'adresse lu.

5. Système d'enregistrement d'informations selon la revendication 4, caractérisé en ce que les codes d'adresse (AC) comprennent des codes temporels absolus spécifiant ladite distance comme temps de reproduction.

6. Système d'enregistrement d'informations selon l'une quelconque des revendications 3, 4 ou 5, caractérisé en ce que le code auxiliaire (HC) peut être distingué des codes d'adresse par des combinaisons binaires spécifiques qui ne se présentent pas dans les codes d'adresse.

7. Système d'enregistrement d'informations selon l'une quelconque des revendications 1 à 6, caractérisé en ce que la modulation de piste comprend une excursion de piste périodique dans une direction transversale à la direction de la piste, la fréquence de ladite excursion de piste périodique étant modulée en conformité avec le signal auxiliaire, les moyens de lecture (82, 86, 88) comprenant des moyens de détection (86) pour détecter la modulation de la piste et pour générer un signal de détection d'une fréquence correspondant à la fréquence de la modulation de piste détectée, et un démodulateur de fréquence (88) pour détecter des variations de fréquence dans le signal de détection dans le but de récupérer le signal auxiliaire.

8. Système d'enregistrement d'informations selon l'une quelconque des revendications 2 à 7, caractérisé en ce que la piste (4) comprend des parties qui sont sensiblement concentriques avec un centre de rotation (20), les données de commande indiquant le code d'adresse d'au moins une partie de piste ayant une position radiale prédéterminée (21, 23) par rapport audit centre (20).

9. Système d'enregistrement d'informations selon la revendication 8, caractérisé en ce que le dispositif d'enregistrement comprend des moyens pour enregistrer des informations de contenu en fonction des codes auxiliaires lus, lesdites informations indiquant les adresses de parties enregistrées du signal d'information, dans une partie de piste ayant une position radiale prédéterminée (21) spécifiée par les codes auxiliaires (HC).

10. Système d'enregistrement d'informations selon la revendication 9, caractérisé en ce que la position radiale prédéterminée (21) est située sur la périphérie interne du motif de piste formé par les parties de piste concentriques.

11. Système d'enregistrement d'informations selon l'une quelconque des revendications 8 à 10, caractérisé en ce que le dispositif d'enregistrement comprend des moyens pour enregistrer un signal final indiquant la fin du signal d'information enregistré, et des moyens pour déterminer, en fonction des codes auxiliaires (HC) lus, la partie de piste où l'enregistrement du signal final doit commencer de telle manière que le début d'un enregistrement du signal final soit situé avant une position (23) indiquée par des codes auxiliaires.

12. Système d'enregistrement d'informations selon l'une quelconque des revendications 8, 9 ou 10, caractérisé en ce que la position de référence est située dans une partie de piste ayant une position radiale prédéterminée (21, 23).

13. Dispositif d'enregistrement comprenant toutes les particularités techniques du dispositif d'enregistrement comme défini dans l'une quelconque des revendications précédentes.

14. Support d'enregistrement comprenant toutes les particularités du support d'enregistrement comme défini dans l'une quelconque des revendications 1 à 13.

FIG.1a

FIG.1b

FIG.1c

FIG.1d

8 ch. bits | 76 ch. bits | 8 ch. bits

0 · 0 · 1 · 0 · 1 · 1 · 0 · · · 0 · 1 · 0 · 1 · 0

FIG.2

20  mm  13  21  ss  14  22  ff  15  16  17

← 8 bit → ← 8 bit → ← 8 bit → ← 14 bit →

FIG.3

FIG.4

FIG.5

EP 0 397 238 B1

mm                    ss                    ff

AC

| 1 | X | X | X | X | X | X | | 0 | X | X | X | X | X | X | | 0 | X | X | X | X | X | X | — 66

20        13'         21    14'            22        15'

| 0 | X | X | X | X | X | X | | 0 | X | X | X | X | X | X | | 0 | X | X | X | X | X | X | — 67

20       13'          21    14'           22       15'

HC

| 0 | X | X | X | X | X | X | | 1 | X | X | X | X | X | X | | 0 | X | X | X | X | X | X | — 61

20       13'          21    14'          22       15'

| 1 | X | X | X | X | X | X | | 1 | X | X | X | X | X | X | | 0 | X | X | X | X | X | X | — 62

20       13'          21    14'          22       15'

| 0 | X | X | X | X | X | X | | 0 | X | X | X | X | X | X | | 1 | X | X | X | X | X | X | — 63

20       13'          21    14'          22       15

| 0 | X | X | X | X | X | X | | 1 | X | X | X | X | X | X | | 1 | X | X | X | X | X | X | — 64

20       13'          21    14'          22       15

| 1 | X | X | X | X | X | X | | 1 | X | X | X | X | X | X | | 1 | X | X | X | X | X | X | — 65

20       13'          21    14'          22       15

| 1 | X | X | X | X | X | X | | 0 | X | X | X | X | X | X | | 1 | X | X | X | X | X | X | — 69

20       13'          21      14'          22       15

## FIG.6

HC            HC            HC      4,        HC

AC

9 x AC          9 x AC          9 x AC

## FIG.7

14

FIG.8

FIG.9